# EUROPÄISCHE PATENTSCHRIFT

(11) **EP 2 117 151 B1**
(45) Veröffentlichungstag und Bekanntmachung des Hinweises auf die Patenterteilung: **10.04.2013**
(21) Anmeldenummer: 08008633.3
(22) Anmeldetag: 07.05.2008
(51) Int. Cl.: H04L 1/06

(54) **Übermittlung sicherheitsgerichteter Eingangssignale über einen unsicheren Kanal mittels eines sicherheitsgerichteten Telegramms**
Transfer of security oriented entry signals through a non-secure channel by means of a security oriented telegram
Transmission de signaux d'entrée orientés vers la sécurité par un canal non sûr d'un télégramme orienté vers la sécurité

(43) Veröffentlichungstag der Anmeldung: 11.11.2009
(73) Patentinhaber: Siemens Aktiengesellschaft, 80333 München (DE)
(72) Erfinder: Haller, Herbert, 92260 Fichtenhof (DE); Wiesgickl, Bernhard, 92249 Vilseck (DE)

(56) Entgegenhaltungen:
- EP-A- 1 439 657
- DE-A1- 19 920 299
- JP-A- 2006 287 565

## Beschreibung

Übermittlung sicherheitsgerichteter Eingangssignale über einen unsicheren Kanal mittels eines sicherheitsgerichteten Telegramms

Die vorliegende Erfindung betrifft ein Betriebsverfahren für eine nahe eines mehrkanaligen, sicherheitsgerichteten Sensors, aber weiter entfernt von einer Hauptauswertungseinrichtung angeordnete Vorauswertungseinrichtung. Die vorliegende Erfindung betrifft weiterhin eine derartige Vorauswertungseinrichtung.

Bei sicherheitsgerichteten Eingabesensoren der Kategorien 3 und 4 gemäß der IEC 13849-2 muss eine fehlersichere Signalerfassung erfolgen. In der Praxis geschieht dies in aller Regel dadurch, dass der entsprechende Sensor mindestens zweikanalig aufgebaut ist.

Um bei einem derartigen Sensor dessen erfasste Signale einer Hauptauswertungseinrichtung (beispielsweise einer speicherprogrammierbaren Steuerung) zuführen zu können, müssen für jeden Kanal des Sensors je zwei Leitungen verlegt werden. Dies führt zu einem relativ großen Verdrahtungsaufwand. Weiterhin erhöht sich die Gefahr einer Fehlverdrahtung.

In vielen Fällen ist weiterhin der Sensor in einem großen Abstand (etliche Meter, manchmal mehrere hundert Meter, in Einzelfällen sogar über einen Kilometer) von der Hauptauswertungseinrichtung entfernt angeordnet. In derartigen Fällen treten zwei weitere Nachteile auf.

Zum einen stellen auf Grund der erforderlichen Leitungslänge die Leitungen einen erheblichen Kostenfaktor dar. Weiterhin wird das Signal jedes Kanals in der Regel zwangsdynamisiert oder anderweitig von Zeit zu Zeit getestet. Je größer die Leitungslänge zwischen Sensor und Hauptauswertungseinrichtung ist, desto geringer muss jedoch eine Testfrequenz gewählt werden, da höherfrequente Signale auf Grund der großen Leitungslänge verschliffen werden. Folglich steigt eine Latenzzeit, die zwischen dem Auftreten eines Fehlers und dessen Erkennen durch die Hauptauswertungseinrichtung vergeht, mit der Leitungslänge an.

Die EP 1 439 657 A2 offenbart ein System zur Übertragung sicherer Prozesssignale zwischen Ein- und Ausgangseinheiten. Dabei werden zum Übertragen von sicheren Prozessinformationen mehrere, zur Erkennung eines systemsicherheitsrelevanten Ereignisses, redundant erfasste Prozesssignale zur systembasierten Weiterverarbeitung in ein einziges Prozesssignal umgesetzt.

Die Aufgabe der vorliegenden Erfindung besteht darin, einfache Möglichkeiten zu schaffen, mittels derer der Verdrahtungsaufwand reduziert werden kann.

Die Aufgabe wird verfahrenstechnisch durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 7.

Erfindungsgemäß nimmt die Vorauswertungseinrichtung bei jedem Eintreten einer Abtastbedingung über jeden Kanal des Sensors (Sensorkanal) jeweils ein einzelnes Signal entgegen. Anhand der Gesamtheit der entgegen genommenen Signale ermittelt die Vorauswertungseinrichtung ein sicheres Telegramm. Das sichere Telegramm überträgt die Vorauswertungseinrichtung über einen einzelnen Kanal (Übertragungskanal) zur Hauptauswertungseinrichtung. Die Vorauswertungseinrichtung ermittelt das sichere Telegramm derart, dass es nicht nur eine Information über die einzelnen Signale oder ein aus den einzelnen Signalen abgeleitetes Vorauswertungsergebnis (Nutzinformation) enthält, sondern zusätzlich Prüfinformationen enthält, anhand derer von der Hauptauswertungseinrichtung eine fehlerbehaftete Ermittlung, eine fehlerbehaftete Übermittlung und ein Ausbleiben des sicheren Telegramms erkennbar sind.

Es ist möglich, dass der Übertragungskanal als drahtgebundener Übertragungskanal ausgebildet ist. In diesem Fall besteht der Übertragungskanal aus zwei sich von der Hauptauswertungseinrichtung zur Vorauswertungseinrichtung erstreckenden Leitungen. Vorzugsweise erfolgt hierbei über die Leitungen zugleich die Versorgung der Vorauswertungseinrichtung mit elektrischer Energie.

Alternativ ist es möglich, dass der Übertragungskanal als leitungsfreier Übertragungskanal ausgebildet ist. Beispielsweise kann der Übertragungskanal als Funkstrecke ausgebildet sein, beispielsweise als Bluetooth- oder Zigbee-Verbindung. In diesem Fall reduziert sich der Verdrahtungsaufwand auf Null.

Auch im Falle einer Ausgestaltung des Übertragungskanals als leitungsfreier Übertragungskanal ist prinzipiell eine Energieversorgung der Vorauswertungseinrichtung über den Übertragungskanal möglich. Diese Ausgestaltung stellt jedoch nicht den Regelfall dar.

Es ist möglich, dass über den Übertragungskanal ein rein unidirektionaler Datenverkehr erfolgt. In diesem Fall werden ausschließlich die sicheren Telegramme von der Vorauswertungseinrichtung zur Hauptauswertungseinrichtung übertragen. Diese Ausgestaltung stellt den einfachsten Fall dar.

Alternativ ist es möglich, dass der Datenverkehr zwischen der Vorauswertungseinrichtung und der Hauptauswertungseinrichtung bidirektional ist. In diesem Fall werden zusätzlich zu den sicheren Telegrammen, die von der Vorauswertungseinrichtung zur Hauptauswertungseinrichtung übertragen werden, weitere Daten von der Hauptauswertungseinrichtung zur Vorauswertungseinrichtung übertragen. Beispielsweise ist es möglich, dass die Vorauswertungseinrichtung von der Hauptauswertungseinrichtung über den Übertragungskanal vorab (d. h. vor dem Übermitteln von sicheren Telegrammen) und/oder in Pausen zwischen Übertragungen von sicheren Telegrammen Steuerinformationen entgegen nimmt und die Steuerinformationen bei einer Ansteuerung der Sensorkanäle und/oder bei der Ermittlung der Nutzinformation und/oder der Prüfinformationen berücksichtigt.

Alternativ oder zusätzlich ist es möglich, dass die Hauptauswertungseinrichtung an die Vorauswertungseinrichtung von Zeit zu Zeit eine Telegrammanforderung übermittelt. In diesem Fall wird die Abtastbedingung dadurch erfüllt, dass die Vorauswertungseinrichtung von der Hauptauswertungseinrichtung über den Übertragungskanal eine Telegrammanforderung entgegen nimmt.

Unabhängig davon, ob eine unidirektionale oder eine bidirektionale Datenübermittlung erfolgt, ist es stets möglich, dass die Abtastbedingung dadurch erfüllt wird, dass die Vorauswertungseinrichtung einen Ablauf eines innerhalb der Vorauswertungseinrichtung angeordneten Zeitgebers erfasst.

Die Aufgabe wird weiterhin durch eine Vorauswertungseinrichtung mit den Merkmalen des Anspruchs 8 gelöst. Vorteilhafte Ausgestaltungen der Vorauswertungseinrichtung sind Gegenstand der abhängigen Ansprüche 9 bis 11.

Erfindungsgemäß ist die Vorauswertungseinrichtung derart ausgebildet, dass sie im Betrieb ein Betriebsverfahren der obenstehend beschriebenen Art ausführt.

Vorzugsweise ist die Vorauswertungseinrichtung dem Sensor proprietär zugeordnet. Insbesondere kann die Vorauswertungseinrichtung zusammen mit dem Sensor in einem gemeinsamen Gehäuse angeordnet sein.

Es ist möglich, dass die Vorauswertungseinrichtung mit diskreten Bauelementen aufgebaut ist. Vorzugsweise jedoch ist sie als ASIC ausgebildet.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch den Aufbau einer sicheren Signal- auswertung,
- FIG 2: einen Ausschnitt von FIG 1,
- FIG 3: ein Ablaufdiagramm,
- FIG 4: ein sicheres Telegramm,
- FIG 5 bis 7: verschiedene Möglichkeiten der Datenübertragung und
- FIG 8: einen zu FIG 1 alternativen Aufbau einer siche- ren Signalauswertung.

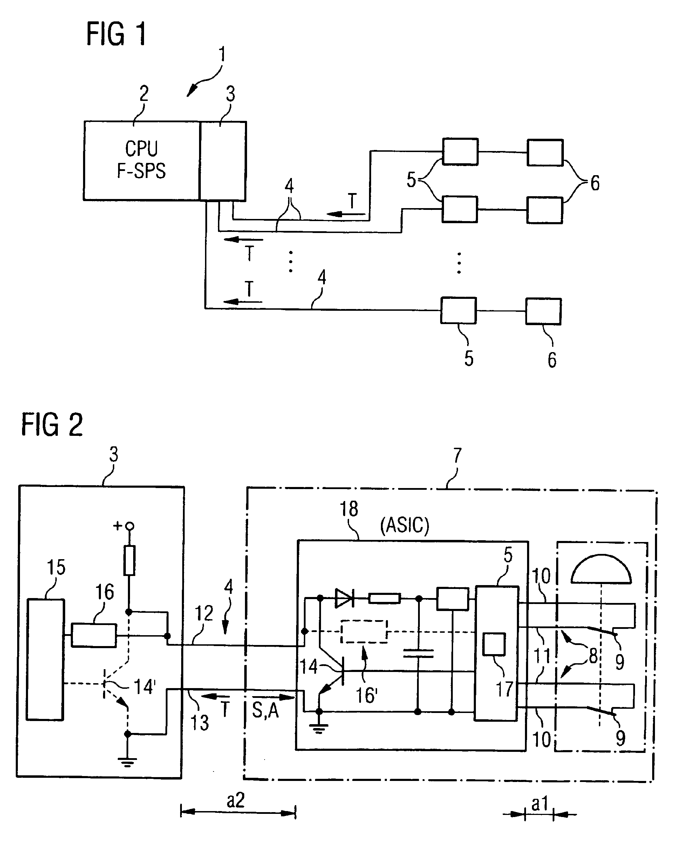

Gemäß FIG 1 ist eine Hauptauswertungseinrichtung 1 rein beispielhaft als fehlersichere speicherprogrammierbare Steuerung ausgebildet. Beispielsweise kann die Hauptauswertungseinrichtung 1 als fehlersichere speicherprogrammierbare Steuerung der Baureihe SIMATIC S7-315F oder der - inzwischen veralteten - SIMATIC S5-115F der Firma Siemens AG ausgebildet sein. Die speicherprogrammierbare Steuerung 1 ist gemäß FIG 1 modular aufgebaut, d. h. sie besteht aus einer Zentraleinheit 2 und Peripheriebaugruppen 3. In FIG 1 ist hierbei nur eine der Peripheriebaugruppen 3 dargestellt, nämlich eine sichere Eingabebaugruppe 3. Die speicherprogrammierbare Steuerung 1 könnte jedoch alternativ als Kompakt-SPS ausgebildet sein, beispielsweise als speicherprogrammierbare Steuerung der - inzwischen veralteten - SIMATIC S5-95F der Firma Siemens AG.

Auch eine Ausgestaltung der Hauptauswertungseinrichtung 1 als speicherprogrammierbare Steuerung ist nicht zwingend. Alternativ könnte die Hauptauswertungseinrichtung 1 beispielsweise als numerische Steuerung oder als Steuerungs-PC ausgebildet sein.

Die sichere Eingabebaugruppe 3 (bzw. allgemeiner die Hauptauswertungseinrichtung 1) weist eine Anzahl von Eingangskanälen 4 auf. Jeder Eingangskanal 4 dient proprietär der Übertragung eines sicheren Telegramms T. Zu diesem Zweck ist - siehe auch FIG 2 - jeder Eingangskanal 4 mit einer jeweiligen Vorauswertungseinrichtung 5 verbunden. Die jeweilige Vorauswertungseinrichtung 5 ist wiederum mit einem der jeweiligen Vorauswertungseinrichtung 5 proprietär zugeordneten Sensor 6 verbunden. Der Sensor 6 ist hierbei ein mehrkanaliger, sicherheitsgerichteter Sensor 6. Der Begriff "mehrkanaliger, sicherheitsgerichteter Sensor" ist hierbei in dem Sinne zu verstehen, dass zwar über jeden Sensorkanal 8 des Sensors 6 ein eigenes (in der Regel binäres) Eingangssignal erfasst wird, die Eingangssignale bei ordnungsgemäßem Funktionieren des Sensors 6 jedoch miteinander korrespondieren.

Nachfolgend wird nur eine einzelne der Vorauswertungseinrichtungen 5 und deren Sensor 6 näher erläutert. Die Ausführungen sind jedoch analog auch auf die anderen Vorauswertungseinrichtungen 5 und die anderen Sensoren 6 übertragbar.

Die Vorauswertungseinrichtung 5 ist in der Regel dem Sensor 6 proprietär zugeordnet. Sie ist nahe des Sensors 6 angeordnet. Der Begriff "nahe des Sensors" bedeutet hierbei einen Abstand a1 von maximal 100 cm. Meist beträgt der Abstand a1 der Vorauswertungseinrichtung 5 vom Sensor 6 sogar nur einige Zentimeter, beispielsweise weniger als 10 cm. Insbesondere kann die Vorauswertungseinrichtung 5 zusammen mit dem Sensor 6 in einem gemeinsamen Gehäuse 7 angeordnet sein.

Ein Abstand a2 der Vorauswertungseinrichtung 5 zur Hauptauswertungseinrichtung 1 ist hingegen erheblich größer als der Abstand a1 der Vorauswertungseinrichtung 5 vom Sensor 6. In der Regel beträgt der Abstand a2 der Vorauswertungseinrichtung 5 von der Hauptauswertungseinrichtung 1 etliche Meter, beispielsweise 20 m, 50 m, 100 m oder mehr. In Einzelfällen ist sogar ein Abstand a2 von über 1.000 m möglich.

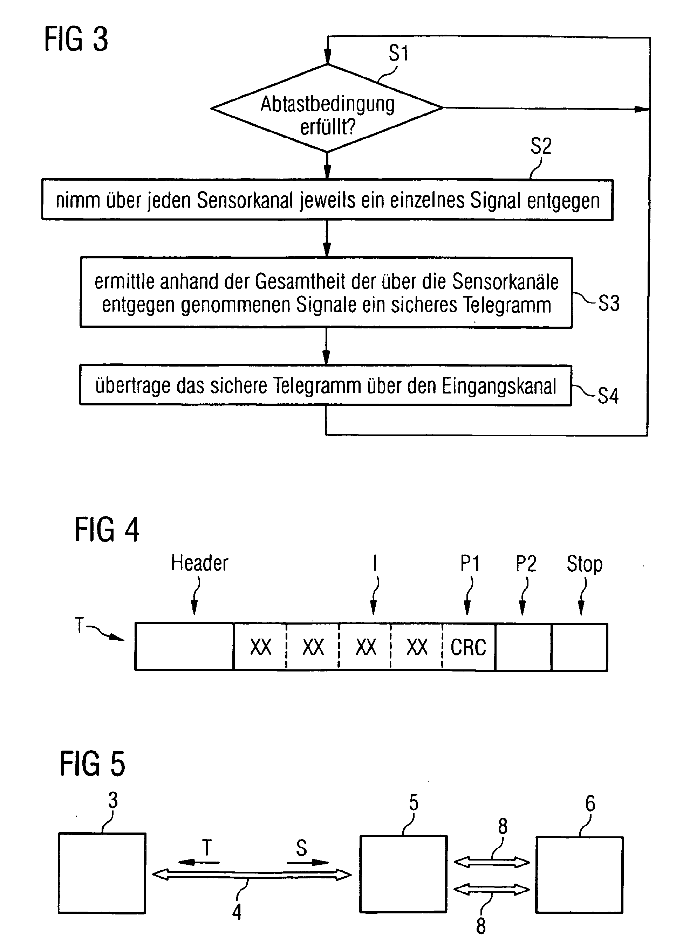

Die Kommunikation zwischen dem Sensor 6, der Vorauswertungseinrichtung 5 und der Hauptauswertungseinrichtung 1 (bzw. hier der Eingabebaugruppe 3) wird nachfolgend anhand des Betriebs der Vorauswertungseinrichtung 5 in Verbindung mit FIG 3 näher erläutert.

Gemäß FIG 3 prüft die Vorauswertungseinrichtung 5 in einem Schritt S1, ob eine Abtastbedingung erfüllt ist. Der Schritt S1 wird von der Vorauswertungseinrichtung 5 wiederholt, bis die Abtastbedingung erfüllt ist. Erst dann geht die Vorauswertungseinrichtung 5 zu einem Schritt S2 über.

Im Schritt S2 nimmt die Vorauswertungseinrichtung 5 über jeden Sensorkanal 8 des Sensors 6 jeweils ein einzelnes Signal entgegen. Über jeden Sensorkanal 8 ist hierbei - getrennt von den anderen Sensorkanälen 8 - der Schaltzustand je eines Schaltkontakts 9 des Sensors 6 erfassbar.

Die Erfassung des jeweiligen Schaltzustands des jeweiligen Schaltkontakts 9 erfolgt so, wie es im Stand der Technik an sich bekannt ist. Beispielsweise ist es möglich, dass die Vorauswertungseinrichtung 5 den jeweiligen Sensorkanal 8 über eine erste Sensorkanalleitung 10 mit einem dynamischen Eingangssignal beaufschlagt und prüft, ob an einer zweiten Sensorkanalleitung 11 des jeweiligen Sensorkanals 8 ebenfalls ein dynamisches Signal ansteht. Auch komplizierte Auswertungsschemata, anhand derer nicht nur der Schaltzustand des jeweiligen Schaltkontakts 9, sondern beispielsweise auch Kurzschluss und Kabelbruch erkennbar sind, sind möglich.

In einem Schritt S3 ermittelt die Vorauswertungseinrichtung 5 anhand der Gesamtheit der über die Sensorkanäle 8 entgegen genommenen Signale ein sicheres Telegramm T. Die Ermittlung erfolgt hierbei gemäß FIG 4 derart, dass das sichere Telegramm T eine Information I über die einzelnen Signale oder ein aus den einzelnen Signalen abgeleitetes Vorauswertungsergebnis (Nutzinformation) enthält. Beispielsweise kann das sichere Telegramm T gemäß FIG 4 für jedes erfasste Signal dessen Zustand (Schaltkontakt 9 offen/geschlossen, Leitungsbruch, Leitungskurzschluss) jeweils in zwei Bit eines Nutzbytes codieren. Alternativ oder zusätzlich kann die Vorauswertungseinrichtung 5 bereits eine logische Verknüpfung der einzelnen Signale vornehmen und das Ergebnis der logischen Verknüpfung in demselben oder einem anderen Nutzbyte codiert hinterlegen.

Die Ermittlung des Schrittes S3 umfasst weiterhin die Ermittlung einer ersten Prüfinformation P1. Anhand der ersten Prüfinformation P1 ist eine fehlerbehaftete Übermittlung des sicheren Telegramms T erkennbar. Beispielsweise kann die erste Prüfinformation ein Paritybit oder mehrere Paritybits umfassen, eine CRC Prüfsumme umfassen usw..

Weiterhin umfasst das sichere Telegramm T gemäß FIG 4 eine zweite Prüfinformation P2. Die zweite Prüfinformation P2 kann hierbei gegebenenfalls mit der ersten Prüfinformation P1 vermischt sein. Anhand der zweiten Prüfinformation P2 ist auf Seiten der Hauptauswertungseinrichtung 1 erkennbar, ob das Ermitteln des sicheren Telegramms T durch die Vorauswertungseinrichtung 5 fehlerfrei oder fehlerbehaftet erfolgt und ob einzelne sichere Telegramme T ausbleiben. Es kann also ein ordnungsgemäßes Funktionieren der Vorauswertungseinrichtung 5 überprüft werden.

Die zweite Prüfinformation P2 kann beispielsweise unter Verwendung einer sogenannten codierten Programmierung zuzüglich einer laufenden Nummer ermittelt werden. Die codierte Programmierung ist als solche Fachleuten allgemein bekannt und beispielsweise in Seite 4 der WO 2007/134915 A1 beschrieben. Alternativ kann die Vorauswertungseinrichtung 5 beispielsweise zwei Mikrokontroller oder dergleichen umfassen, die sich gegenseitig überwachen.

In einem Schritt S4 überträgt die Vorauswertungseinrichtung 5 das sichere Telegramm T über den jeweiligen Eingangskanal 4 zur Hauptauswertungseinrichtung 1 bzw. zur sicheren Eingabebaugruppe 3. Der jeweilige Eingangskanal 4 ist hierbei ein einfacher, als solcher nicht sicherer einzelner Kanal 4. Er stellt einen Übertragungskanal 4 im Sinne des Anspruchs 1 dar.

Bei der Ausgestaltung der vorliegenden Erfindung gemäß den FIG 1 und 2 ist der Übertragungskanal 4 als drahtgebundener Übertragungskanal 4 ausgebildet. Er besteht daher aus zwei Leitungen 12, 13, die sich von der Hauptauswertungseinrichtung 1 (bzw. der sicheren Eingabebaugruppe 3) zur Vorauswertungseinrichtung 5 erstrecken. Insbesondere bei einer derartigen leitungsgebundenen Ausgestaltung des Übertragungskanals ist es möglich, dass über die Leitungen 12, 13, wie in FIG 2 dargestellt, zusätzlich zur Datenübertragung auch die Versorgung der Vorauswertungseinrichtung 5 mit elektrischer Energie erfolgt.

Bei der Ausgestaltung gemäß den FIG 1 und 2 - siehe insbesondere FIG 2 - ist es beispielsweise möglich, dass die Vorauswertungseinrichtung 5 ein Schaltelement 14 aufweist (beispielsweise einen Bipolar- oder Feldeffekttransistor). Wenn das Schaltelement 14 durchgesteuert wird, bricht die Versorgungsspannung auf der Leitung 12 ein. Dies kann auf Seiten der Hauptauswertungseinrichtung 1 (bzw. der sicheren Eingabebaugruppe 3) durch eine entsprechende Logik 15 erfasst werden. Gegebenenfalls kann hierbei zwischen der Logik 15 und der Leitung 12 eine Pegelanpassungsschaltung 16 angeordnet sein.

Mittels der Logik 15 erfolgt eine sicherheitsgerichtete Auswertung der sicheren Telegramme T. Insbesondere erfolgt eine sicherheitsgerichtete Reaktion
- bei Ausbleiben der sicheren Telegramme T,
- bei Fehlerhaftigkeit der sicheren Telegramme und
- bei entsprechendem Inhalt der Nutzinformation I der sicheren Telegramme T.

Es ist möglich, dass die Kommunikation zwischen der Hauptauswertungseinrichtung 1 (bzw. der sicheren Eingabebaugruppe 3) und der Vorauswertungseinrichtung 5 rein unidirektional verläuft. In diesem Fall ist die bisher beschriebene Ausgestaltung der Vorauswertungseinrichtung 5 und der Hauptauswertungseinrichtung 1 vollständig ausreichend. Alternativ ist jedoch möglich, dass die Kommunikation zwischen der Hauptauswertungseinrichtung 1 und der Vorauswertungseinrichtung 5 bidirektional erfolgt. In diesem Fall ist auch auf Seiten der Hauptauswertungseinrichtung 1 ein entsprechendes weiteres Schaltelement 14' angeordnet, auf Seiten der Vorauswertungseinrichtung 5 gegebenenfalls eine weitere Pegelanpassungsschaltung 16'. Die obigen Ausführungen zum Schaltelement 14 sind hierbei analog auf das weitere Schaltelement 14' anwendbar. Das weitere Schaltelement 14' und die weitere Pegelanpassungsschaltung 16' sind in FIG 2 gestrichelt dargestellt.

Wenn eine bidirektionale Kommunikation zwischen der Hauptauswertungseinrichtung 1 und der Vorauswertungseinrichtung 5 erfolgt, ist es beispielsweise gemäß FIG 5 möglich, dass die Hauptauswertungseinrichtung 1 über den jeweiligen Übertragungskanal 4 Steuerinformationen S an die Vorauswertungseinrichtung 5 übermittelt. Die Vorauswertungseinrichtung 5 nimmt in diesem Fall die Steuerinformationen S entgegen. Die Steuerinformationen S können beispielsweise spezifizieren, auf welche Art und Weise (beispielsweise mit welcher Frequenz) die Sensorkanäle 8 angesteuert werden sollen. Alternativ oder zusätzlich können die Steuerinformationen S spezifizieren, auf welche Art und Weise die Nutzinformation I und/oder die Prüfinformationen P1, P2 ermittelt werden sollen. Die Vorauswertungseinrichtung 5 ist daher in der Lage, die übermittelten Steuerinformationen S entsprechend zu berücksichtigen.

Es ist möglich, dass die Steuerinformationen S einmalig vorab, also bei Betriebsaufnahme, an die Vorauswertungseinrichtung 5 übermittelt werden. Alternativ ist es möglich, die Steuerinformationen S jederzeit, also insbesondere in Pausen zwischen Übertragungen von sicheren Telegrammen T, vorzugeben.

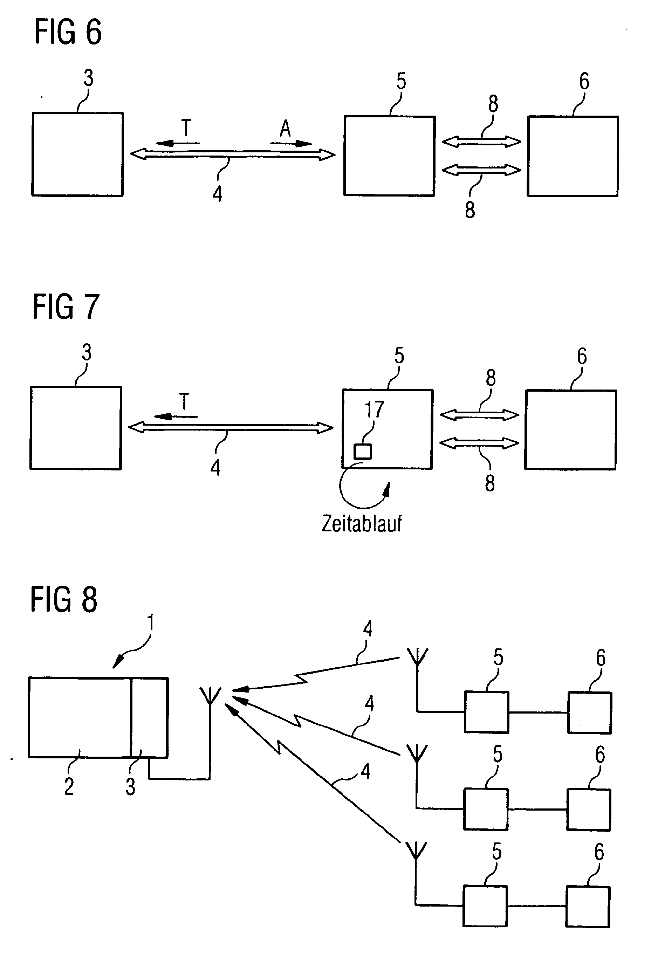

Alternativ oder zusätzlich zu der Ausgestaltung von FIG 5 ist es gemäß FIG 6 im Falle einer bidirektionalen Kommunikation zwischen Hauptauswertungseinrichtung 1 und Vorauswertungseinrichtung 5 möglich, dass die Hauptauswertungseinrichtung 1 von Zeit zu Zeit über den Übertragungskanal 8 eine Telegrammanforderung A an die Vorauswertungseinrichtung 5 übermittelt. In diesem Fall nimmt die Vorauswertungseinrichtung 5 die Telegrammanforderung A entgegen. Das Entgegennehmen der Telegrammanforderung A entspricht dem Erfüllen der Abtastbedingung des Schrittes S1 von FIG 3.

Im Falle der Ausgestaltung gemäß FIG 6 kann beispielsweise die Hauptauswertungseinrichtung 1 eine sicherheitsgerichtete Reaktion unter anderem dann auslösen, wenn nach Ablauf einer (gegebenenfalls parametrierbaren) Wartezeit seit dem Absenden einer Telegrammanforderung A kein entsprechendes sicheres Telegramm T empfangen wurde.

Wenn die Ausgestaltung gemäß FIG 6 nicht realisiert wird, weist die Vorauswertungseinrichtung 5 entsprechend FIG 2 in der Regel einen innerhalb der Vorauswertungseinrichtung 5 angeordneten Zeitgeber 17 auf. Der Zeitgeber 17 läuft jeweils nach einer vorbestimmten Zykluszeit ab, beispielsweise alle 5 ms. In diesem Fall ist die Abtastbedingung gemäß FIG 7 jeweils dann erfüllt, wenn die Vorauswertungseinrichtung 5 den Ablauf des Zeitgebers 17 erfasst. Auf Seiten der Hauptauswertungseinrichtung 1 wird in diesem Fall eine sicherheitsgerichtete Reaktion unter anderem dann ausgelöst, wenn nach Ablauf einer mit der Zykluszeit des Zeitgebers 17 abgestimmten Wartezeit, gerechnet seit dem Empfang des letzten gültigen sicheren Telegramms T, kein weiteres gültiges sicheres Telegramm T empfangen wurde. Die Ausgestaltung gemäß FIG 7 ist unabhängig davon realisierbar, ob die Kommunikation zwischen der Hauptauswertungseinrichtung 1 und der Vorauswertungseinrichtung 5 unidirektional oder bidirektional erfolgt.

Bei der Ausgestaltung gemäß den FIG 1 und 2 ist, wie beschrieben, der Übertragungskanal 4 drahtgebunden ausgebildet. Im Gegensatz hierzu ist bei der Ausgestaltung gemäß FIG 8 der Übertragungskanal 4 als leitungsfreier Übertragungskanal ausgebildet. Beispielsweise kann der Übertragungskanal 4 als Funkstrecke gemäß dem Bluetooth-Standard oder gemäß einem anderen üblichen Standard ausgebildet sein. Dieser Unterschied (leitungsfreie statt drahtgebundene Ausbildung des Übertragungskanals 4) stellt den Hauptunterschied zwischen den FIG 1 und 2 auf der einen Seite und FIG 8 auf der anderen Seite dar. Die übrigen Ausführungen bleiben weiterhin gültig.

Die Vorauswertungseinrichtung 5 kann als diskrete Schaltung ausgebildet sein. Vorzugsweise ist die Vorauswertungseinrichtung 5 jedoch in einem integrierten Schaltkreis 18 angeordnet. Insbesondere kann die Vorauswertungseinrichtung 5 als ASIC ausgebildet sein.

Die erfindungsgemäßen Ausgestaltungen weisen viele Vorteile auf. Insbesondere ist eine Frequenz, mit der die Ansteuerung der Sensorkanäle 8 durch die Vorauswertungseinrichtung 5 erfolgt, unabhängig vom Abstand der Hauptauswertungseinrichtung 1 vom Sensor 6. Ferner werden - bei einer drahtgebundenen Ausbildung des Übertragungskanals 4 - weniger Leitungen 12, 13 benötigt als im Stand der Technik bzw. - bei einer leitungsfreien Ausgestaltung des Übertragungskanals 4 - sogar gar keine Leitungen.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Betriebsverfahren für eine nahe eines mehrkanaligen, sicherheitsgerichteten Sensors (6), aber weiter entfernt von einer Hauptauswertungseinrichtung (1) angeordnete Vorauswertungseinrichtung (5),
- wobei die Vorauswertungseinrichtung (5) bei jedem Eintreten einer Abtastbedingung über jeden Kanal (8) des Sensors (6) jeweils ein einzelnes Signal entgegen nimmt, anhand der Gesamtheit der entgegen genommenen Signale ein sicheres Telegramm (T) ermittelt und das sichere Telegramm (T) über einen einzelnen Kanal (4) zur Hauptauswertungseinrichtung (1) überträgt,
- wobei die Vorauswertungseinrichtung (5) das sichere Telegramm (T) derart ermittelt, dass es nicht nur eine Information (I) über die einzelnen Signale oder ein aus den einzelnen Signalen abgeleitetes Vorauswertungsergebnis enthält, sondern zusätzlich Prüfinformationen (P1, P2) enthält, anhand derer von der Hauptauswertungseinrichtung (1) eine fehlerbehaftete Ermittlung, eine fehlerbehaftete Übermittlung und ein Ausbleiben des sicheren Telegramms (T) erkennbar sind.

2. Betriebsverfahren nach Anspruch 1,
**dadurch gekennzeichnet,**
**dass** der einzelne Kanal (4) aus zwei sich von der Hauptauswertungseinrichtung (1) zur Vorauswertungseinrichtung (5) erstreckenden Leitungen (12, 13) besteht.

3. Betriebsverfahren nach Anspruch 2,
**dadurch gekennzeichnet,**
**dass** über die Leitungen (12, 13) die Versorgung der Vorauswertungseinrichtung (5) mit elektrischer Energie erfolgt.

4. Betriebsverfahren nach Anspruch 1,
**dadurch gekennzeichnet,**
**dass** der einzelne Kanal (4) als leitungsfreier Übertragungskanal ausgebildet ist.

5. Betriebsverfahren nach einem der obigen Ansprüche,
**dadurch gekennzeichnet,**
**dass** die Vorauswertungseinrichtung (5) von der Hauptauswertungseinrichtung (1) über den einzelnen Kanal (4) vorab und/oder in Pausen zwischen Übertragungen von sicheren Telegrammen (T) Steuerinformationen (S) entgegen nimmt und die Steuerinformationen (S) bei einer Ansteuerung der Kanäle (8) des Sensors und/oder bei der Ermittlung der Nutzinformation (I) und/oder der Prüfinformationen (P1, P2) berücksichtigt.

6. Betriebsverfahren nach einem der Ansprüche 1 bis 5,
**dadurch gekennzeichnet,**
**dass** die Abtastbedingung dadurch erfüllt wird, dass die Vorauswertungseinrichtung (5) von der Hauptauswertungseinrichtung (1) über den einzelnen Kanal (4) eine Telegrammanforderung (A) entgegen nimmt.

7. Betriebsverfahren nach einem der Ansprüche 1 bis 5,
**dadurch gekennzeichnet,**
**dass** die Abtastbedingung dadurch erfüllt wird, dass die Vorauswertungseinrichtung (5) einen Ablauf eines innerhalb der Vorauswertungseinrichtung (5) angeordneten Zeitgebers (17) erfasst.

8. Vorauswertungseinrichtung, die im Betrieb nahe eines mehrkanaligen, sicherheitsgerichteten Sensors (6), aber weiter entfernt von einer Hauptauswertungseinrichtung (1) angeordnet ist und im Betrieb ein Betriebsverfahren nach einem der obigen Ansprüche ausführt.

9. Vorauswertungseinrichtung nach Anspruch 8,
**dadurch gekennzeichnet,**
**dass** die Vorauswertungseinrichtung dem Sensor (6) proprietär zugeordnet ist.

10. Vorauswertungseinrichtung nach Anspruch 9,
**dadurch gekennzeichnet,**
**dass** die Vorauswertungseinrichtung zusammen mit dem Sensor (6) in einem gemeinsamen Gehäuse (7) angeordnet ist.

11. Vorauswertungseinrichtung nach Anspruch 8, 9 oder 10,
**dadurch gekennzeichnet,**
**dass** die Vorauswertungseinrichtung als ASIC ausgebildet ist.

## Claims

1. Operating method for a pre-evaluation facility (5) arranged close to a multichannel, security-oriented sensor (6) but further away from a main evaluation facility (1),
- wherein the pre-evaluation facility (5) receives an individual signal in each instance upon entry of a sampling condition via each channel (8) of the sensor (6), determines a secure telegram (T) with the aid of the totality of the received signals and transmits the secure telegram (T) via an individual channel (4) to the main evaluation facility (1),
- wherein the pre-evaluation facility (5) determines the secure telegram (T) such that it not only contains an item of information (I) about the individual signals or a pre-evaluation result derived from the individual signals, but instead also contains additional checking information (P1, P2), with the aid of which a faulty determination, a faulty transmission and an absence of the secure telegram (T) can be identified by the main evaluation facility (1).

2. Operating method according to claim 1,
**characterised in that**
the individual channel (4) consists of two lines (12, 13) extending from the main evaluation facility (1) to the pre-evaluation facility (5).

3. Operating method according to claim 2,
**characterised in that**
the pre-evaluation facility (5) is provided with electrical energy by way of the lines (12, 13).

4. Operating method according to claim 1,
**characterized in that**
the individual channel (4) is embodied as a line-free transmission channel.

5. Operating method according to one of the above claims,
**characterized in that**
the pre-evaluation facility (5) receives control information (S) from the main evaluation facility (1) via the individual channel (4) in advance and/or in pauses between transmissions of secure telegrams (T) and takes the control information (S) into account when actuating the channels (8) of the sensor and/or when determining the useful information (I) and/or the checking information (P1, P2).

6. Operating method according to one of claims 1 to 5,
**characterized in that**
the sampling condition is fulfilled **in that** the pre-evaluation facility (5) receives a telegram request (A) from the main evaluation facility (1) via the individual channel (4).

7. Operating method according to one of claims 1 to 5,
**characterised in that**
the sampling condition is fulfilled **in that** the pre-evaluation facility (5) detects an expiry of a real-time clock (17) arranged within the pre-evaluation facility (5).

8. Pre-evaluation facility, which, during operation, is arranged close to a multichannel, security-oriented sensor (6) but further away from a main evaluation facility, and, during operation, executes an operating method according to one of the above claims.

9. Pre-evaluation facility according to claim 8, **characterised in that**
the pre-evaluation facility is assigned in a proprietary manner to the sensor (6).

10. Pre-evaluation facility according to claim 9, **characterized in that**
the pre-evaluation facility is arranged in a shared housing (7) together with the sensor (6).

11. Pre-evaluation facility according to claim 8, 9 or 10,
**characterised in that**
the pre-evaluation facility is embodied as an ASIC.

## Revendications

1. Procédé pour faire fonctionner un dispositif ( 5 ) d'exploitation préalable monté près d'un capteur ( 6 ) de sécurité à plusieurs canaux, mais plus éloigné d'un dispositif ( 1 ) d'exploitation principal,
- dans lequel le dispositif ( 5 ) d'exploitation préalable reçoit, à chaque entrée d'une condition d'échantillonnage, sur chaque canal ( 8 ) du capteur ( 6 ), respectivement un signal individuel, détermine au moyen de l'ensemble des signaux reçus un télégramme ( T ) sûr et transmet le télégramme ( T ) sûr au dispositif d'exploitation principal par un canal ( 4 ) individuel,
- dans lequel le dispositif ( 5 ) d'exploitation préalable détermine le télégramme ( T ) sûr, de manière à ce qu'il contienne non seulement une information ( I ) sur les signaux individuels ou un résultat d'exploitation préalable déduit des signaux individuels, mais contienne supplémentaire des informations ( P1, P2 ) de contrôle, au moyen desquelles une détermination défectueuse par le dispositif ( 1 ) d'exploitation principal, une transmission défectueuse et une absence du télégramme ( T ) sûr peuvent être détectées.

2. Procédé suivant la revendication 1,
**caractérisé**
**en ce que** le canal ( 4 ) individuel est constitué de deux lignes ( 12, 13 ) allant du dispositif ( 1 ) d'exploitation principal au dispositif ( 5 ) d'exploitation préalable.

3. Procédé suivant la revendication 2,
**caractérisé**
**en ce que** l'alimentation du dispositif ( 5 ) d'exploitation préalable en énergie électrique s'effectue par les lignes ( 12, 13 ).

4. Procédé suivant la revendication 1,
**caractérisé**
**en ce que** le canal ( 4 ) individuel est constitué en canal de transmission sans ligne.

5. Procédé suivant l'une des revendications précédentes,
**caractérisé**
**en ce que** le dispositif ( 5 ) d'exploitation préalable reçoit du dispositif ( 1 ) d'exploitation principal, par le canal ( 4 ) individuel, à l'avance et/ou dans des intervalles entre des transmissions de télégrammes ( T ) sûrs, des informations ( S ) de commande et prend en compte les informations ( S ) de commande, lors d'une commande des canaux ( 8 ) du capteur et/ou lors de la détermination de l'information ( I ) utile et/ou des informations ( P1, P2 ) de contrôle.

6. Procédé suivant l'une des revendications 1 à 5,
**caractérisé**
**en ce que** la condition d'échantillonnage est satisfaite par le fait que le dispositif ( 5 ) d'exploitation préalable reçoit une demande ( A ) de télégramme du dispositif ( 1 ) d'exploitation principal par le canal ( 4 ) individuel.

7. Procédé suivant l'une des revendications 1 à 5,
**caractérisé**
**en ce que** la condition d'échantillonnage est satisfaite par le fait que le dispositif ( 5 ) d'exploitation préalable détecte un écoulement d'une horloge ( 17 ) disposée au sein du dispositif ( 5 ) d'exploitation préalable.

8. Dispositif d'exploitation préalable, qui est monté en fonctionnement près d'un capteur ( 6 ) de sûreté à plusieurs canaux, mais plus éloigné d'un dispositif ( 1 ) d'exploitation principal, et réalise en fonctionnement un procédé suivant l'une des revendications précédentes.

9. Dispositif d'exploitation préalable suivant la revendication 8,
**caractérisé**
**en ce que** le dispositif d'exploitation préalable est associé de manière privée au capteur ( 6 ).

10. Dispositif d'exploitation préalable suivant la revendication 9,
**caractérisé**
**en ce que** le dispositif d'exploitation préalable est monté ensemble avec le capteur ( 6 ) dans un boîtier ( 7 ) commun.

11. Dispositif d'exploitation préalable suivant la revendication 8, 9 ou 10,
**caractérisé**
**en ce que** le dispositif d'exploitation préalable est constitué en ASIC.
